# EUROPEAN PATENT APPLICATION

(11) **EP 2 645 317 A1**
(43) Date of publication of application: **02.10.2013**
(21) Application number: 13161311.9
(22) Date of filing: 27.03.2013
(51) Int. Cl.: G06Q 10/06

(54) **System and method for managing software licenses**

(30) Priority: 27.03.2012 US 201213431392
(71) Applicant: Huawei Technologies Co., Ltd., Longgang District, Shenzhen Guangdong 518129 (CN)
(72) Inventor: Song, Zhexuan, 518129 Shenzhen (CN); Zhang, Hengliang, 518129 Shenzhen (CN)
(74) Representative: Thun, Clemens

(57) **Abstract**

A method for managing software licenses in a cloud environment includes receiving, by a license services system associated with the cloud environment, a request to use a first application from a first user associated with a first subscribing entity, and receiving, by the license services system, a request to use a second application from a second user associated with a second subscribing entity. The method also includes permitting, by the license services system, the first user to execute the first application if a license for the first application is available to the first subscribing entity, and permitting, by the license service system, the second user to execute the second application if a license for the second application is available to the second subscribing entity.

## Description

### CROSS REFERENCE

The present application claims priority to U.S. Non-Provisional Patent Application Serial No. 13/431,392 filed March 27, 2012 and entitled "System and Method for Managing Software license".

### TECHNICAL FIELD

The present disclosure relates generally to digital computing, and more particularly to a system and method for managing software licenses.

### BACKGROUND

Generally, cloud computing encompasses hardware and software, as well as techniques, for providing computing resources, information, software, and the like, to devices (such as computers, laptops, computing tablets, smart phones, and the like) as a metered service. Typically, cloud computing resources provide computation, software, data access, storage resources, and the like, without requiring users knowing or investing in the computing resources. The users usually access the cloud computing resources through a web browser or a lightweight application connected to the cloud computing resources over a network, such as the Internet.

When an entity (or similarly, a business or enterprise) purchases software from a software vendor, the enterprise typically purchases a specific number of software licenses that permits the specific number of instances of the software to be active at a given time. The business normally is responsible for managing the distribution and use of the software licenses.

### SUMMARY OF THE DISCLOSURE

Example embodiments of the present disclosure which provide a system and method for managing software license.

In accordance with an example embodiment of the present disclosure, a method for managing software licenses in a cloud environment is provided. The method includes receiving, by a license services system associated with the cloud environment, a request to use a first application from a first user associated with a first subscribing entity, and receiving, by the license services system, a request to use a second application from a second user associated with a second subscribing entity. The method also includes permitting, by the license services system, the first user to execute the first application if a license for the first application is available to the first subscribing entity, and permitting, by the license service system, the second user to execute the second application if a license for the second application is available to the second subscribing entity.

In accordance with another example embodiment of the present disclosure, a method for executing a software application by a virtual machine operating in a cloud environment is provided. The method includes receiving a software application launch request, and sending a license request for a software license of the software application to a license service system. The method also includes receiving a response to the license request from the license service system, launching the software application if the license service system granted the license request, and halting the software application launch request if the license service system denied the license request.

In accordance with another example embodiment of the present disclosure, a license service system is provided. The license service system includes a receiver, and a processor operatively coupled to the receiver. The receiver receives a request to use a first application from a first user associated with a first subscribing entity, and receives a request to use a second application from a second user associated with a second subscribing entity. The processor permits the first user to execute the first application if a license for the first application is available to the first subscribing entity, and permits the second user to execute the second application if a license for the second application is available to the second subscribing entity.

In accordance with another example embodiment of the present disclosure, a server is provided. The server includes a receiver, a transmitter, and a processor operatively coupled to the receiver and to the transmitter. The receiver receives a software application launch request, and receives a response to a license request from a license service system. The transmitter sends the license request for a software license of a software application to the license service system. The processor launches the software application if the license service system granted the license request, and halts the software application launch request if the license service system denied the license request.

One advantage of an embodiment is that it is possible to reduce software licensing costs, as well as reduce a total cost of using cloud computing, by using a cloud computing based license service system to manage software licenses.

A further advantage of an embodiment is that accounting of software usage may be made more accurate for auditing purposes, which may help the entity more accurately determine its software license needs.

### BRIEF DESCRIPTION OF THE DRAWINGS

For a more complete understanding of the present disclosure, and the advantages thereof, reference is now made to the following descriptions taken in conjunction with the accompanying drawing, in which:
Figure 1 illustrates an example cloud computing environment according to example embodiments described herein;
Figure 2 illustrates an example portion of platform services provided in a cloud computing environment according to example embodiments described herein;
Figure 3 illustrates an example detailed view of a portion of a cloud computing environment 300, wherein entities involved in licensed software usage and software license management are highlighted according to example embodiments described herein;
Figure 4 illustrates an example flow diagram of operations in a depositing of software license(s) with a license service system according to example embodiments described herein;
Figure 5 illustrates an example flow diagram of operations in a subscribing entity obtaining access to and using a licensed software application according to example embodiments described herein;
Figure 6 illustrates an example flow diagram of operations in a virtual machine obtaining a software license and allowing a subscribing entity to use a licensed software application according to example embodiments described herein;
Figure 7 illustrates an example flow diagram of operations in a license service system controlling access to licensed software according to example embodiments described herein;
Figure 8 illustrates an example diagram of a first communications device according to example embodiments described herein; and
Figure 9 illustrates an example diagram of a second communications device according to example embodiments described herein.

### DETAILED DESCRIPTION OF ILLUSTRATIVE EMBODIMENTS

The operating of the current example embodiments and the structure thereof are discussed in detail below. It should be appreciated, however, that the present disclosure provides many applicable inventive concepts that can be embodied in a wide variety of specific contexts. The specific embodiments discussed are merely illustrative of specific structures of the disclosure and ways to operate the disclosure, and do not limit the scope of the disclosure.

One embodiment of the disclosure relates to a cloud based license service system for managing software licenses for multiple subscribing entities. As an example, a license service system consists of one or multiple software license servers and an interface for submitting requests. For example, a cloud based license service system receives a request to use a first application from a first user associated with a first subscribing entity and a request to use a second application from a second user associated with a second subscribing entity. The cloud based license service system permits the first user to execute the first application if a license for the first application is available to the first subscribing entity and permits the second user to execute the second application if a license for the second application is available to the second subscribing entity. For example, a cloud based license service system receives a request to use a first application from a first user associated with a first subscribing entity and a request to use a second application from a second user associated with a second subscribing entity. The cloud based license service system grants the request to use the first application based on a first license deposit corresponding to the first application and the first subscribing entity, and grants the request to use the second application based on a second license deposit corresponding to the second application and the second subscribing entity.

The present disclosure will be described with respect to example embodiments in a specific context, namely a cloud computing environment with a cloud based license service system managing access to licensed applications for a plurality of subscribing entities.

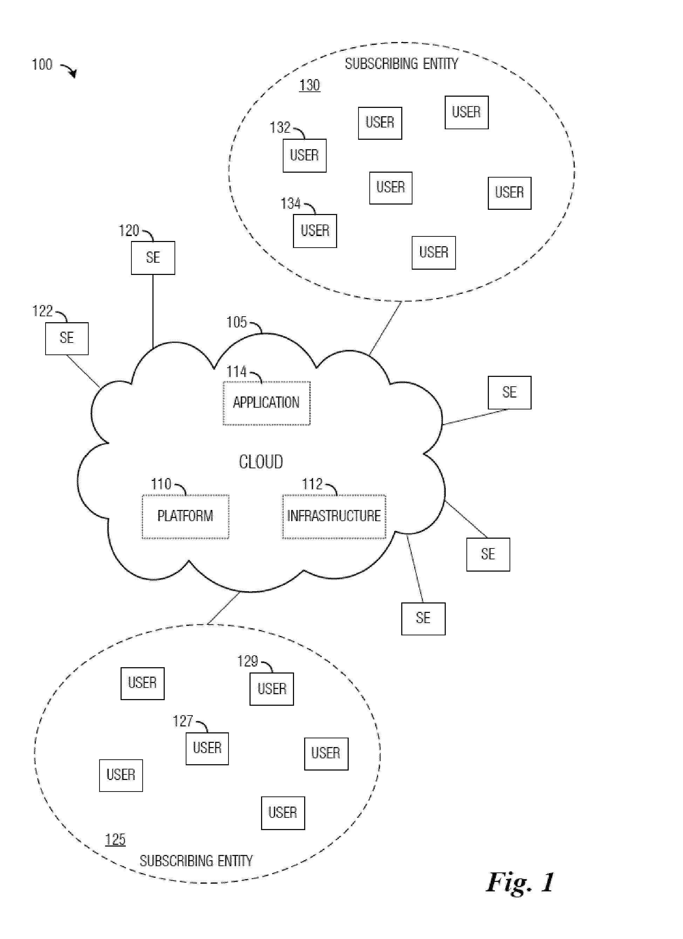

Figure 1 illustrates a cloud computing environment 100. Cloud computing environment 100 includes a cloud 105 provided by one or more service providers. Cloud 105 provides platform services 110 (which may include operating systems, execution environments, databases, servers, and the like), infrastructure services 112 (which may include physical machines, virtual machines, storage, networks, and the like), and/or application services 114 (which may include software packages).

Cloud computing environment 100 also includes a plurality of subscribing entities (SE), which pay the service provider(s) for access to services (e.g., platform services 110, infrastructure services 112, and/or application services 114) that are provided by the service provider(s). Subscribing entities may be single users, as well as businesses or enterprises. Single user subscribing entities include subscribing entity 120 and subscribing entity 122, which may be a single user according to an example embodiment, while business subscribing entities include subscribing entity 125 and subscribing entity 130. Business subscribing entities may include multiple users, such as users 127 and 129 for subscribing entity 125, and users 132 and 134 for subscribing entity 130.

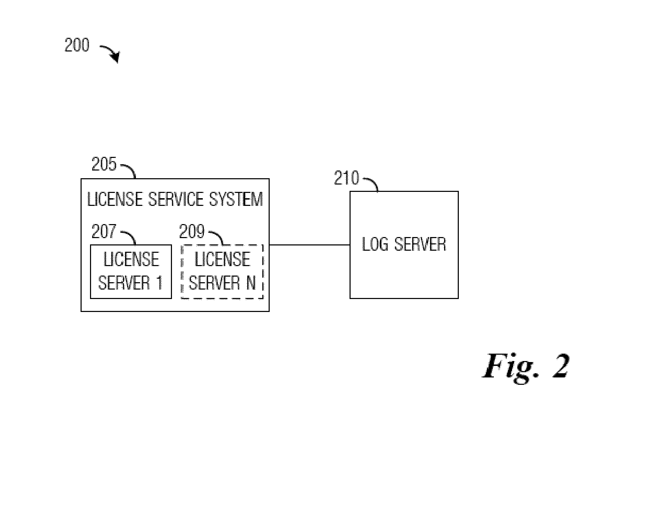

Figure 2 illustrates a portion of services 200 provided in a cloud computing environment. Services 200 include a license service system 205, which includes one or more license servers (e.g., license server 1 207 and/or license server N 209), and a log server 210. License service system 205 may control the use of software applications for subscribing entities according to software licenses deposited in license service system 205 by the subscribing entities. Typically, license service system 205 may control access to licensed software applications. If a subscribing entity or a user associated with a subscribing entity has an available software license to a licensed software application, license service system 205 may grant access to the licensed software application. If the subscribing entity or the user associated with the subscribing entity does not have an available software license to the licensed software application, license service system 205 may block access to the license software application. As an alternative, license service system 205 may offer the subscribing entity or the user an option of purchasing or renting a software license if there is no available software licenses associated with the subscribing entity.

License service system 205 may maintain software license deposits for each subscribing entity, which it may maintain in memory or in a storage medium, such as magnetic media or solid state media, either locally or remotely. While in some circumstances, license service system 205 may maintain a centralized software license deposit for multiple subscribing entities and then charge the subscribing entities for their usage of the software licenses. It is noted that since cloud computing environments typically maintain and control virtual machine images, it may allow for rapid implementation of control mechanisms, such as software license access, software license usage, and the like, in virtual machines. Log server 210 may maintain usage logs, e.g., information related to the software application (and hence the software license) used, a duration of the use, identity of user or subscribing entity if appropriate, a check-out time for when a software license is assigned to a user or a subscribing entity, a check-in time for when a software license is returned to license service system 205, and the like.

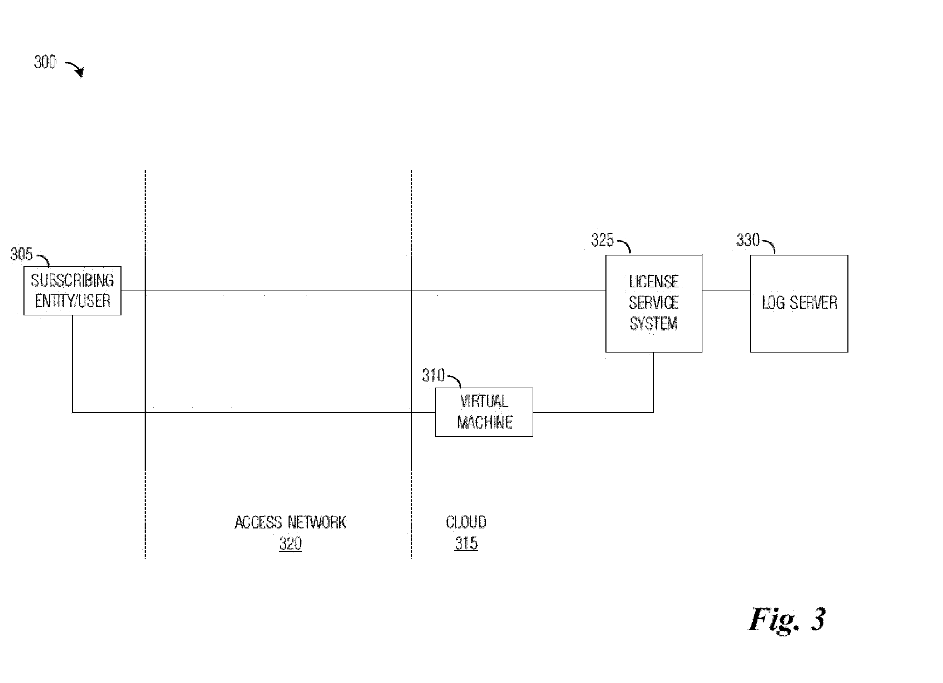

Figure 3 illustrates a detailed view of a portion of a cloud computing environment 300, wherein entities involved in licensed software usage and software license management are highlighted. As shown in Figure 3, a subscribing entity (or a user associated with a subscribing entity) 305 is attempting to execute a licensed software application on a virtual machine 310 that is part of an infrastructure service provided by a service provider of a cloud 315. Subscribing entity 305 is accessing virtual machine 310 by way of an access network 320, such as the Internet.

Before virtual machine 310 is allowed to execute the licensed software application, virtual machine 310 may access a license service system 325 to obtain a license permitting virtual machine 310 to execute the licensed software application. As an example, license service system 325 may access a license depository associated with subscribing entity 305 to determine if subscribing entity 305 has a license for the licensed software application. If subscribing entity 305 has a license for the licensed software application, then license service system 325 may allow virtual machine 310 to execute the licensed software application.

As an example, the licensed software application may be maintained in an encrypted sector (e.g., a sector of memory), and when virtual machine 310 attempts to launch the licensed software application, a software license check-out process may be triggered. After a successful software license check-out (e.g., license service system 325 has determined that subscribing entity 305 has a software license for the licensed software application), a decryption key to the encrypted sector may be provided to virtual machine 310 thereby granting virtual machine 310 access to the encrypted sector and subscribing entity 305 may begin to utilize the licensed software application.

Since license service system 325 controls access to the licensed software application, license service system 325 may be able to accurately account for actual usage of the licensed software application, rather than simply account for when subscribing entity 305 obtained virtual machine 310 (which may have also obtained the software license) and when subscribing entity 305 released the virtual machine 310 (which may have also released the software license). The accurate accounting of the actual usage of the licensed software application may enable for more accurate billing of the usage of the licensed software application, a reduction in the number of software licenses needed by subscribing entity 305 (e.g., since a user in subscribing entity 305 may launch virtual machine 310, but not actually begin using the licensed software application, the software license may be taken away from the user and assigned to another user (also in subscribing entity 305) with an immediate need for the licensed software application, hence reducing a number of software licenses from two to one), enable a renting of unused software licenses from one subscribing entity to another subscribing entity, and the like.

License service system 325 may update a log in a log server 330 with information about subscribing entity 305. As an example, the information may include identifying information about subscribing entity 305, information related to the licensed software application used, a check-out time of when the software license is assigned to subscribing entity 305, and the like.

If subscribing entity 305 does not have a license for the licensed software application or if all of the licenses for the licensed software application associated with subscribing entity 305 are being used, then license service system 325 may disallow virtual machine 310 from executing the licensed software application. License service system 325 may update a log in log server 330 with information about the failed access attempt by subscribing entity 305. As an example, the information may include identifying information about subscribing entity 305, information related to the licensed software application used, a time of when the access was attempted, and the like.

As an alternative example, if subscribing entity 305 does not have a license for the licensed software application or if all of the licenses for the licensed software application associated with subscribing entity 305 are being used, then license service system 325 may disallow virtual machine 310 from executing the licensed software application and initiate a procedure to offer subscribing entity 305 an opportunity to purchase a license for the licensed software application from a vendor of the licensed software application, purchase a temporary license for the licensed software application from the vendor of the licensed software application, rent a temporary license for the license software application from another subscribing entity, and the like. If subscribing entity 305 elects to purchase or rent a software license, license service system 325 may update the license depository associated with subscribing entity 305 and update a log in log server 330. If subscribing entity 305 decided to rent a software license from another subscribing entity, license service system 325 may also update a license depository associated with the other subscribing entity as well, as well as update accounting logs for the other subscribing entity to help ensure that the other subscribing entity is compensated for renting the software license.

When subscribing entity 305 no longer needs access to the licensed software application, subscribing entity 305 may initiate a release of the software license. Virtual machine 310 may submit a request to license service system 325 to release the software license. License service system 325 may update the license depository associated with subscribing entity 305. License service system 325 may also update a log in log server 330 with information about subscribing entity 305. As an example, the information may include information related to the licensed software application used, a check-in time of when the software license was released by subscribing entity 305, and the like.

Once the software license has been released to license service system 325, if subscribing entity 305 no longer has a need for virtual machine 310, subscribing entity 305 may also release virtual machine 310 back to cloud 315. However, if subscribing entity 305 has additional computing needs, it may use virtual machine 310 to access additional software applications. Although, subscribing entity 305 may initiate a new virtual machine from cloud 315 to access some of the additional software applications if virtual machine 310 does not meet capability requirements or if it exceeds the capability requirements (and therefore, may be too expensive to use) of the additional software applications.

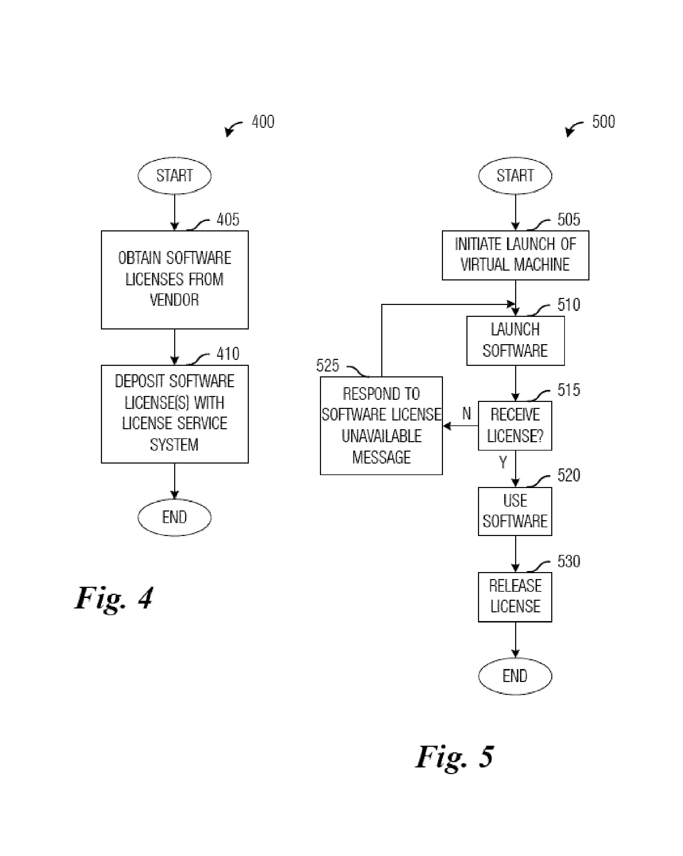

Figure 4 illustrates a flow diagram of operations 400 in a depositing of software license(s) with a license service system. Operations 400 may be indicative of operations occurring in a subscribing entity, such as subscribing entity 120 or a user 132 associated with subscribing entity 130, as the subscribing entity deposits software licenses with a license service system.

Operations 400 may begin with the subscribing entity obtaining software license(s) from a vendor (block 405). Subscribing entity may, for example, purchase or rent one or more software licenses for licensed software that the subscribing entity is interested in using. The subscribing entity may deposit the one or more software licenses with a license service system (block 410). As an example, the license service system may be provided by a service provider of a cloud computing environment to which the subscribing entity has a subscription agreement.

Figure 5 illustrates a flow diagram of operations 500 in a subscribing entity obtaining access to and using a licensed software application. Operations 500 may be indicative of operations occurring in a subscribing entity, such as subscribing entity 120 or a user 132 associated with subscribing entity 130, as the subscribing entity obtains access to and uses licensed software.

Operations 500 may begin with the subscribing entity initiating a launch of a virtual machine in which the licensed software application will execute (block 505). As an example, the subscribing entity may initiate the launch of the virtual machine by accessing infrastructure services of a cloud computing environment to which it is subscribed. The subscribing entity may initiate the launch of the virtual machine by clicking on a button on its display, for example.

With the virtual machine started, the subscribing entity may launch the licensed software application (block 510). The subscribing entity may launch the licensed software application by selecting the licensed software application from a list of software applications (some of which may be licensed software applications and some of which may not be licensed software applications) available to the subscribing entity. However, since the software application that the subscribing entity is attempting to launch is licensed software, the subscribing entity may not be able to launch the licensed software application until a software license is received.

If the subscribing entity receives a software license for the licensed software application (block 515), then license software application may launch as normal and the subscribing entity may use the licensed software application (block 520). However, if the subscribing entity does not receive a software license for the licensed software application, the subscribing entity may be presented with a software license unavailable message, to which it may respond (block 525).

As an example, the software license unavailable message may indicate to the subscribing entity that there are no available software licenses for the licensed software application. The message may further indicate that the subscribing entity may wait and re-try launching the licensed software application at a later time. The subscribing entity may elect to wait and re-try launching the licensed software application at a later time or to launch a different software application. After waiting, the subscribing entity may return to block 510 to launch the licensed software application.

As an alternative example, the software license unavailable message may indicate to the subscribing entity that there are no available software licenses for the licensed software application and may offer the subscribing entity an option of purchasing a software license for the licensed software application, purchasing a temporary software license for the licensed software application, renting a temporary software license for the licensed software application, and the like. The subscribing entity may elect to wait and re-try launching the licensed software application at a later time or to launch a different software application or the subscribing entity may elect to purchase or rent a software license for the licensed software application. If the subscribing entity elected to purchase or rent a software license for the licensed software application, the subscribing entity may return to block 510 to launch the licensed software application.

Once the licensed software application launches successfully, the subscribing entity may use the licensed software application (block 520). When the subscribing entity finishes using the licensed software application, the subscribing entity may release the software license (block 530). As an example, the releasing of the software license may occur automatically when the subscribing entity exits the licensed software application. As another example, the releasing of the software licensed may occur automatically when the subscribing entity exits the virtual machine on which the licensed software application ran. As yet another example, the releasing of the software license may be initiated by an action (e.g., a selection of a release software license button or icon) of the subscribing entity.

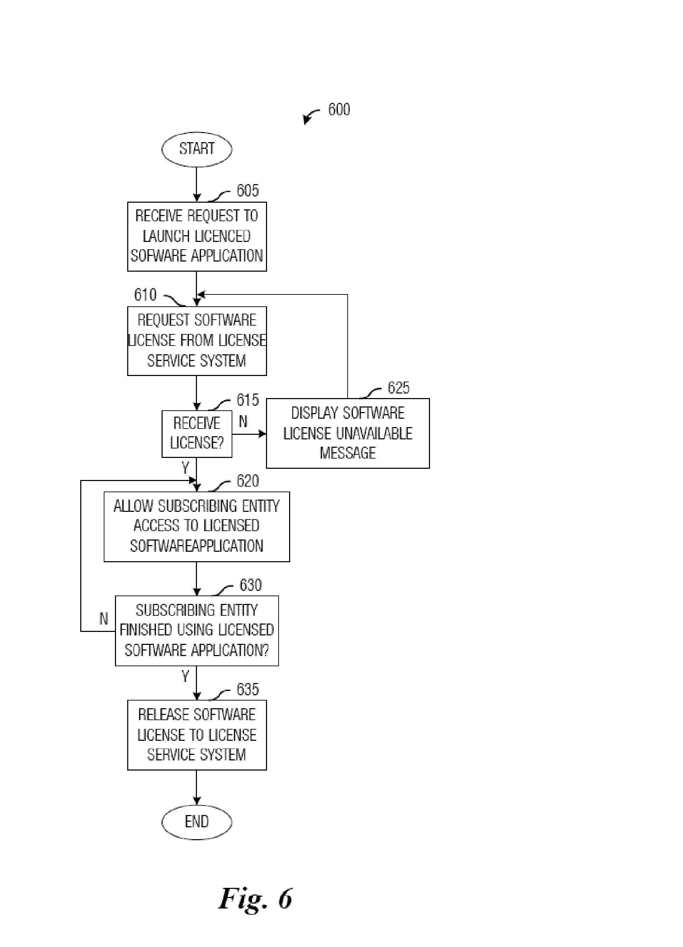

Figure 6 illustrates a flow diagram of operations 600 in a virtual machine obtaining a software license and allowing a subscribing entity to use a licensed software application. Operations 600 may be indicative of operations occurring in a virtual machine, such as virtual machine 310, as the virtual machine obtains a software license for the licensed software application and allows a subscribing entity (or a user associated with the subscribing entity) to use the licensed software application.

Operations 600 may begin with the virtual machine receiving a request to launch a licensed software application (block 605). As an example, the request to launch the licensed software application may be an explicit request made by a subscribing entity when the subscribing entity attempted to launch the licensed software application. As another example, the request to launch the licensed software application may be an implicit request made by the subscribing entity when the subscribing entity launched the virtual machine that is associated with the licensed software application.

The virtual machine may request a software license from a license service system by sending a request for a software license for the licensed software application to the license service system (block 610). As an example, the request for the software license may include identifying information regarding the subscribing entity, identifying information regarding the licensed software application, and the like.

The virtual machine may perform a check to determine if it has received the software license for the licensed software application from the license service system, e.g., a response to the software license request from the license service system (block 615). If the virtual machine has received the software license for the licensed software application from the license service system, the virtual machine may allow the subscribing entity access to the licensed software application (block 620).

If the virtual machine did not receive the software license for the licensed software application, the virtual machine may display a software license unavailable message (block 625). As an example, after displaying the software license unavailable message, the virtual machine may halt the software application launch request. As another example, in addition to displaying the software license unavailable message, the virtual machine may also display a message informing the subscribing entity to try again at a later time. As another example, in addition to displaying the software license unavailable message, the virtual machine may offer the subscribing entity an option of purchasing a software license for the licensed software application, purchasing a temporary software license for the licensed software application, renting a temporary software license for the licensed software application, and the like. The virtual machine may wait for a response from the subscribing entity.

The virtual machine may perform a check to determine if the subscribing entity has finished using the licensed software application (block 630). If the subscribing entity has not finished using the licensed software application, then the virtual machine may continue to allow the subscribing entity access to the licensed software application (block 620). If the subscribing entity has finished using the licensed software application, e.g., the virtual machine may receive a software application stop request from the subscribing entity, then the virtual machine may release the software license to the license service system (block 635). As an example, the virtual machine may release the software license to the license service system by sending a license release request to the license service system. The virtual machine may also stop the execution of the software application.

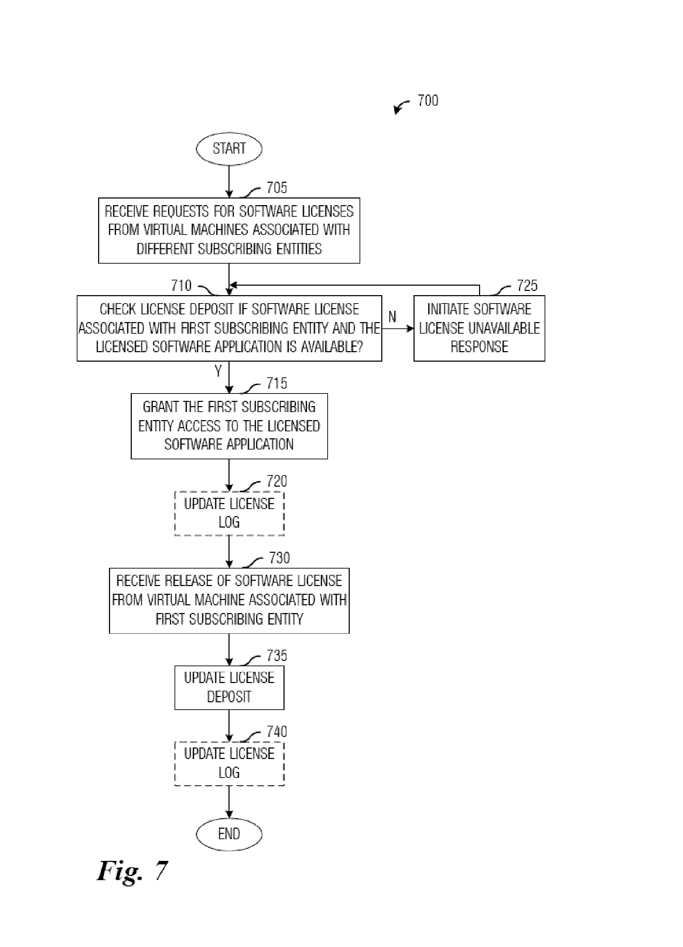

Figure 7 illustrates a flow diagram of operations 700 in a license service system controlling access to licensed software. Operations 700 may be indicative of operations occurring in a license service system, such as license service system 205 and license service system 325, as the license service system controls access to licensed software using software licenses.

Operations 700 may begin with the license service system receiving requests for software licenses from virtual machines associated with different subscribing entities or users associated with subscribing entities (block 705). As an example, the license service system may receive requests for software licenses from virtual machines associated with different subscribing entities having subscriptions for cloud computing services in a cloud computing environment in which the license service system is operating.

For a software license request for a software license for a licensed software application from a virtual machine associated with a subscribing entity, the license service system may check a license deposit associated with the subscribing entity and with the licensed software application to determine if a software license is available (block 710). As an example, the license deposit associated with the subscribing entity and with the licensed software application may be implemented as a counter that may be decremented each time a software license is checked-out and incremented each time a software license is checked-in. Hence, the license service system may check software license availability by checking to see if the counter is zero. If the counter is equal to zero, then no software licenses for the licensed software application is available, while if the counter is a positive integer value, then a software license(s) is available. As another example, the license deposit associated with the subscribing entity and with the licensed software application may be implemented as a counter that may be incremented each time a software license is checked-out and decremented each time a software license is checked-in. Hence, the license service system may check software license availability by checking to see if the counter is equal to a specified value. If the counter is equal to the specified value, then no software licenses for the licensed software application is available, while if the counter is a smaller than the specified value (typically a positive integer value, but it may be equal to zero or even negative), then a software license(s) is available.

If there is a software license associated with the subscribing entity and with the licensed software application available, the license service system may grant the virtual machine (and hence, the subscribing entity) access to the licensed software application (block 715). The license service system may also update the license deposit associated with the subscribing entity and with the licensed software application to reflect check-out of the software license. As an example, the license service system may decrement (or increment, depending on implementation) the license deposit (e.g., the counter).

The license service system may also optionally update a license log in a log service system (block 720). As an example, the license log may include identifying information about the subscribing entity, information related to the licensed software application used, a check-out time of when the software license is assigned to the subscribing entity, and the like.

If there are no software licenses associated with the subscribing entity and with the licensed software application available, the license service system may initiate a software license unavailable response (block 725). As an example, the software license unavailable response may include the license service system disallowing the virtual machine from executing the licensed software application. The license service system may also update a log in the log service system with information about the failed access attempt by the subscribing entity. For example, the information may include identifying information about the subscribing entity, information related to the licensed software application used, a time of when the access was attempted, and the like.

As an alternative example, the software license unavailable response may include the license service system disallowing the virtual machine from executing the licensed software application and initiating a procedure to offer the subscribing entity an opportunity to purchase a license for the licensed software application from a vendor of the licensed software application, purchase a temporary license for the licensed software application from the vendor of the licensed software application, rent a temporary license for the license software application from another subscribing entity, and the like. If the subscribing entity elects to purchase or rent a software license, the license service system may update the license depository associated with subscribing entity and the licensed software application and update a log in the log service system. If the subscribing entity decided to rent a software license from another subscribing entity, the license service system may also update a license depository associated with the other subscribing entity as well, as well as update accounting logs for the other subscribing entity to help ensure that the other subscribing entity is compensated for renting the software license.

The license service system may receive a release of a software license from the virtual machine associated with the first subscribing entity when the first subscribing entity finishes with the licensed software application (block 730). The license service system may update a license deposit associated with the first subscribing entity and the licensed software application, e.g., the license service system may increment (or decrement, depending on the implementation of the license deposit) the license deposit (e.g., the counter) (block 735). The license service system may also optionally update the license log in the log service system (block 740). As an example, the update to the license log may include information related to the licensed software application used, a check-in time of when the software license was released by the subscribing entity, and the like.

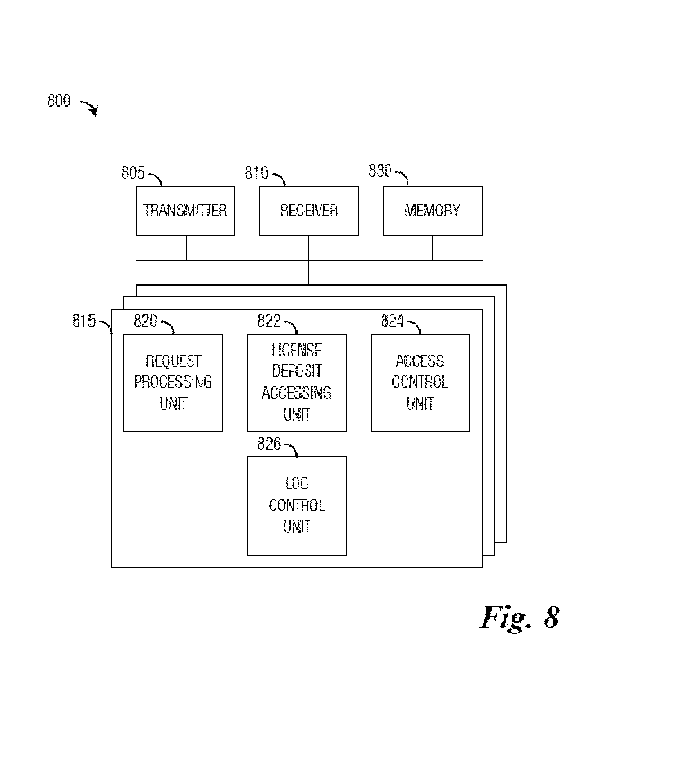

Figure 8 illustrates a diagram of a communications device 800. Communications device 800 may be an implementation of a license service system in a cloud computing environment. Communications device 800 may be used to implement various ones of the embodiments discussed herein. As shown in Figure 8, a transmitter 805 is configured to send messages, software license grants, software license denials, and the like, and a receiver 810 is configured to receive messages, software license requests, software license releases, and the like. Transmitter 805 and receiver 810 may have a wireless interface, a wireline interface, or a combination thereof.

A request processing unit 820 is configured to process software license requests from virtual machines associated with subscribing entities. Request processing unit 820 is also configured to process software license releases from the virtual machines. A license deposit accessing unit 822 is configured to access a license deposit associated with a subscribing entity and with a licensed software application to determine if there is a software license available for check-out to the subscribing entity. An access control unit 824 is configured to control check-out and check-in of software licenses by adjusting (e.g., incrementing or decrementing) a license deposit. A log control unit 826 is configured to update logs, such as license logs, usage logs, accounting logs, and the like. A memory 830 is configured to store software license requests, software license releases, license deposits, log information, and the like.

The elements of communications device 800 may be implemented as specific hardware logic blocks. In an alternative, the elements of communications device 800 may be implemented as software executing in a processor, controller, application specific integrated circuit, or so on. In yet another alternative, the elements of communications device 800 may be implemented as a combination of software and/or hardware.

As an example, transmitter 805 and receiver 810 may be implemented as a specific hardware block, while request processing unit 820, license deposit accessing unit 822, access control unit 824, and log control unit 826 may be software modules executing in a processor 815, such as a microprocessor, a digital signal processor, a custom circuit, or a custom compiled logic array of a field programmable logic array.

It is noted that communications device 800 may include one or more processors 815, with each processor implementing a license server. As an alternative example, a license service system may include one or more communications device 800, with each communications device implementing a license server.

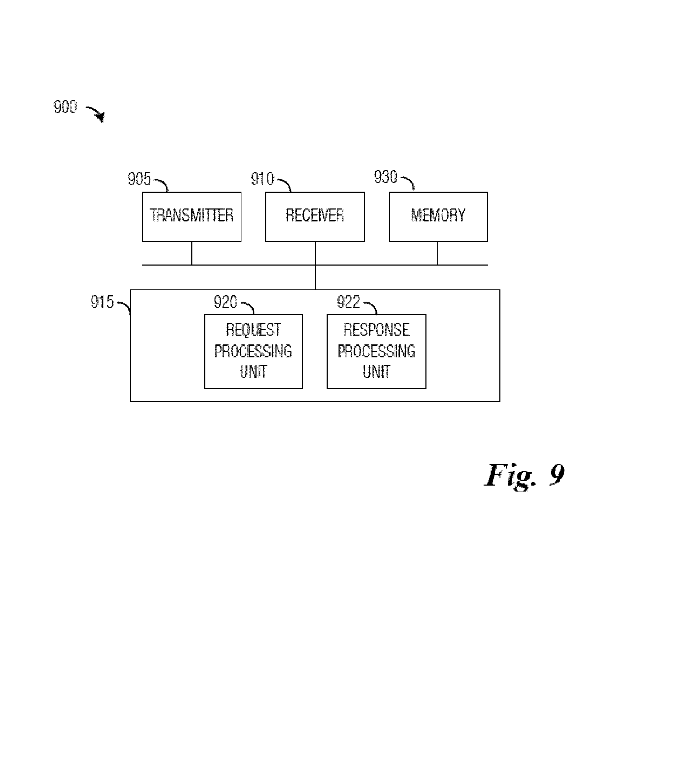

Figure 9 illustrates a diagram of a communications device 900. Communications device 900 may be an implementation of a server providing computing services, e.g., a virtual machine(s) for subscribing entities, in a cloud computing environment. Communications device 900 may be used to implement various ones of the embodiments discussed herein. As shown in Figure 9, a transmitter 905 is configured to send messages, software license grants, software license denials, and the like, and a receiver 910 is configured to receive messages, software license requests, software license releases, and the like. Transmitter 905 and receiver 910 may have a wireless interface, a wireline interface, or a combination thereof.

A request processing unit 920 is configured to process software application requests from subscribing entities. Request processing unit 920 is configured to generate software license requests to be sent to a license service system. Request processing unit 920 is also configured to process software application stop requests from subscribing entities. Request processing unit 920 is configured to generate a software license release request to be sent to the license service system. Response processing unit 922 is configured to process responses to requests from the license service system. Response processing unit 922 is also configured to process responses from the subscribing entities. A memory 930 is configured to store software license requests, software license releases, responses, and the like.

The elements of communications device 900 may be implemented as specific hardware logic blocks. In an alternative, the elements of communications device 900 may be implemented as software executing in a processor, controller, application specific integrated circuit, or so on. In yet another alternative, the elements of communications device 900 may be implemented as a combination of software and/or hardware.

As an example, transmitter 905 and receiver 910 may be implemented as a specific hardware block, while request processing unit 920 and response processing unit 922 may be software modules executing in a processor 915, such as a microprocessor, a digital signal processor, a custom circuit, or a custom compiled logic array of a field programmable logic array.

Although the present disclosure and its advantages have been described in detail, it should be understood that various changes, substitutions and alterations can be made herein without departing from the spirit and scope of the disclosure as defined by the appended claims.

## Claims

1. A method for managing software licenses in a cloud environment, the method comprising:
receiving, by a license services system associated with the cloud environment, a request to use a first application from a first user associated with a first subscribing entity;
receiving, by the license services system, a request to use a second application from a second user associated with a second subscribing entity;
permitting, by the license services system, the first user to execute the first application if a license for the first application is available to the first subscribing entity; and
permitting, by the license service system, the second user to execute the second application if a license for the second application is available to the second subscribing entity.

2. The method of claim 1, wherein the request to use the first application is received from a first virtual machine initiated by the first user.

3. The method of claim 1, further comprising preventing the first user from executing the first application if the license for the first application is unavailable for the first subscribing entity.

4. The method of claim 3, further comprising offering the first user an opportunity to obtain the license for the first application.

5. The method of claim 4, wherein offering the first user the opportunity comprises allowing the first user to purchase the license for the first application; or allowing the first user to rent the license for the first application.

6. The method of claim 5, wherein the license for the first application is rented from a third subscribing entity.

7. The method of claim 1, further comprising updating a first usage log corresponding to the first application and to the first subscribing entity.

8. The method of claim 7, wherein updating the first usage log comprises providing identifying information about the first user, information related to the first application, time information about a check-out time of when the license for the first application is assigned to the first user, or a combination thereof.

9. The method of claim 1, further comprising:
granting the request to use the first application to the first user according to a first license deposit corresponding to the first application and to the first subscribing entity; and
granting the request to use the second application to the second user according to a second license deposit corresponding to the second application and to the second subscribing entity.

10. The method of claim 9, further comprising:
updating the first license deposit corresponding to the first application and to the first subscribing entity; and
updating the second license deposit corresponding to the second application and to the second subscribing entity.

11. The method of claim 10, wherein the first license deposit comprises a first counter having a first value corresponding to a number of licenses for the first application, and wherein updating the first license deposit comprises decrementing the first counter.

12. The method of claim 10, wherein the second license deposit comprises a second counter having a second value corresponding to a number of licenses for the second application, and wherein updating the second license deposit comprises decrementing the second counter.

13. The method of claim 9, wherein the first license deposit comprises a first counter having a first value corresponding to a number of licenses for the first application, and wherein granting the request to use the first application to the first user comprises:
permitting, by the license services system, the first user to execute the first application if the first value is greater than or equal to one; and
disallowing, by the license services system, the first user from executing the first application if the first value is equal to zero.

14. The method of claim 9, wherein the second license deposit comprises a second counter having a second value corresponding to a number of licenses for the second application, and wherein granting the request to use the second application to the second user comprises:
permitting, by the license services system, the second user to execute the second application if the second value is greater than or equal to one; and
disallowing, by the license services system, the second user from executing the second application if the second value is equal to zero.

15. A license service system comprising:
a receiver configured to receive a request to use a first application from a first user associated with a first subscribing entity, and to receive a request to use a second application from a second user associated with a second subscribing entity; and
a processor unit operatively coupled to the receiver, the first processor configured to permit the first user to execute the first application if a license for the first application is available to the first subscribing entity, and to permit the second user to execute the second application if a license for the second application is available to the second subscribing entity.

16. The license service system of claim 15, wherein the first processor is configured to one of the following:
prevent the first user from executing the first application if the license for the first application is unavailable for the first subscribing entity;
offer the first user an opportunity to obtain the license for the first application;
allow the first user to purchase the license for the first application; or
user to rent the license for the first application.

17. The license service system of claim 15, wherein the first processor is configured to update a first usage log corresponding to the first application and to the first subscribing entity.

18. The license service system of claim 15, the processor unit further comprising:
a first processor operatively coupled to the receiver, the first processor configured to permit the first user to execute the first application if a license for the first application is available to the first subscribing entity; and
a second processor operatively coupled to the receiver, the second processor configured to permit the second user to execute the second application if a license for the second application is available to the second subscribing entity.
